Europäisches Patentamt

(19) European Patent Office

Office européen des brevets

(11) Publication number: **0 170 499**
**B1**

(12) **EUROPEAN PATENT SPECIFICATION**

(45) Date of publication of patent specification: **19.09.90**

(51) Int. Cl.⁵: **B 29 C 53/56**

(21) Application number: **85305294.2**

(22) Date of filing: **25.07.85**

(54) Process for manufacturing a structural reinforcing member.

(30) Priority: **27.07.84 JP 155489/84**
**27.07.84 JP 155490/84**
**27.07.84 JP 155491/84**
**15.08.84 JP 170024/84**

(43) Date of publication of application:
**05.02.86 Bulletin 86/06**

(45) Publication of the grant of the patent:
**19.09.90 Bulletin 90/38**

(84) Designated Contracting States:
**CH DE FR GB LI NL**

(56) References cited:
**EP-A-0 063 515**
**GB-A-1 543 586**
**JP-A-60 187 534**
**US-A-2 571 717**
**US-A-2 694 661**
**US-A-3 960 473**
**US-A-4 194 873**
**US-A-4 244 765**

(73) Proprietor: **MITSUI KENSETSU KABUSHIKI KAISHA**
**10-1, 3-Chome Iwamoto-cho**
**Chiyoda-ku Tokyo (JP)**

(72) Inventor: **Okamoto, Tadashi c/o Mitsui Kensetsu K.K.**
**No. 10-1, 3-chome, Iwamoto-cho Chiyoda-ku Tokyo (JP)**
Inventor: **Matsubara, Sumiyuki c/o Mitsui Kensetsu K.K.**
**No. 10-1, 3-chome, Iwamoto-cho Chiyoda-ku Tokyo (JP)**
Inventor: **Hasuo, Koichi c/o Mitsui Kensetsu K.K.**
**No. 10-1, 3-chome, Iwamoto-cho Chiyoda-ku Tokyo (JP)**
Inventor: **Handa, Masahisa c/o Mitsui Kensetsu K.K.**
**No. 10-1, 3-chome, Iwamoto-cho Chiyoda-ku Tokyo (JP)**

(74) Representative: **Bond, Bentley George et al**
**Haseltine Lake & Co. 28 Southampton Buildings Chancery Lane**
**London WC2A 1AT (GB)**

EP 0 170 499 B1

Courier Press, Leamington Spa, England.

## Description

This invention relates to a process for manufacturing a structural reinforcing member which is made of glass fibre, reinforced plastic, carbon fibre reinforced plastic or the like, whose precise sectional shape is not severely restricted by its manner of manufacture and which is used, for instance, as a main reinforcing bar for concrete, a reinforcing bar for shear resistance or the like.

There is known a process for manufacturing a structural reinforcing member of this kind wherein a fibre body comprising a number of threads made of reinforcing fibre is impregnated with a hardenable material such as a thermosetting resin or the like, and is then introduced into a drawing die so as to be formed into a drawn body having a predetermine sectional shape, and the drawn fibre body is subjected to a hardening treatment in a metallic hardening mould.

The foregoing conventional process is inconvenient in that each time that a different sectional shape of the structural reinforcing member is desired, a different metallic mould, whose sectional shape corresponds to the sectional shape of the die, is required. The exchange of the old mould for a new one is troublesome and the manufacturing cost is increased.

It is also known, from Kunststoff-Handbuch, Band VIII, Polyester, R. Vieweg and L. Goerden, chapter 5.4.5.1, to coil a tape around a drawn fibre body, prior to hardening thereof. Also, fibre-reinforced rods formed by curing fibres coated with resin are disclosed in US-A-4194873.

The purpose of this invention is to remove the foregoing inconveniences and provide a process for manufacturing a structural reinforcing member having grooves of different form, and which does not require the conventional metallic hardening mould and is improved in productivity.

According to the present invention there is provided a process for manufacturing a structural reinforcing member wherein a fibre body comprising a plurality of threads of reinforcing fibre is impregnated with a hardenable material and is introduced into a drawing die having a desired sectional shape so as to be formed into a drawn fibre body having a predetermined sectional shape, whereupon a tape is coiled therearound so as to cover the same and the drawn fibre body is subjected to a hardening treatment, characterised in that a string member is coiled around the drawn fibre body covered with the coiled tape so that the coiled string member may penetrate the drawn fibre body and thereafter the drawn fibre body is subjected to said hardening treatment.

The present invention also provides a process for manufacturing a structural reinforcing member wherein a fibre body comprising a plurality of threads of reinforcing fibre is impregnated with a hardenable material and is introduced into a drawing die having a desired sectional shape so as to be formed into a drawn fibre body having a predetermined sectional shape, whereupon a tape is coiled therearound so as to cover the same and the drawn fibre body is subjected to a hardening treatment, characterised in that, before the tape is coiled around the drawn fibre body, a shaping member is provided on the periphery of the drawn fibre body, the tape is coiled around the drawn fibre body and the shaping member so as to cover the same, the shaping member is forced to penetrate the drawn fibre body, and thereafter the drawn fibre body is subjected to said hardening treatment.

Next, embodiments of this invention will be described, by way of example, with reference to the accompanying drawings in which:

Figure 1 shows one embodiment of a process for manufacturing a structural reinforcing member according to this invention;

Figure 2 is an enlarged perspective view showing the step of coiling a tape around a drawn fibre body for covering the same, as applied in the embodiment shown in Figure 1;

Figure 3 shows a modified embodiment of this invention;

Figure 4 shows another embodiment of a process for manufacturing a deformed structural reinforcing member according to this invention;

Figure 5 is an enlarged perspective view of a step similar to Figure 2, as applied in the embodiment shown in Figure 4;

Figure 6 is an enlarged perspective view of part of a structural reinforcing member produced by the embodiment shown in Figure 4;

Figure 7 shows a modified embodiment thereof;

Figure 8 is a perspective view of the step of disposing shaping members on a drawn fibre body, as applied in the embodiment shown in Figure 7;

Figure 9 is a perspective view of the step of coiling a tape around the fibre body bearing the shaping members in the embodiment shown in Figure 8;

Figure 10 is a perspective view of part of a structural reinforcing member produced by the embodiment shown in Figure 7; and

Figure 11 is a perspective view of part of another member according to a modified embodiment;

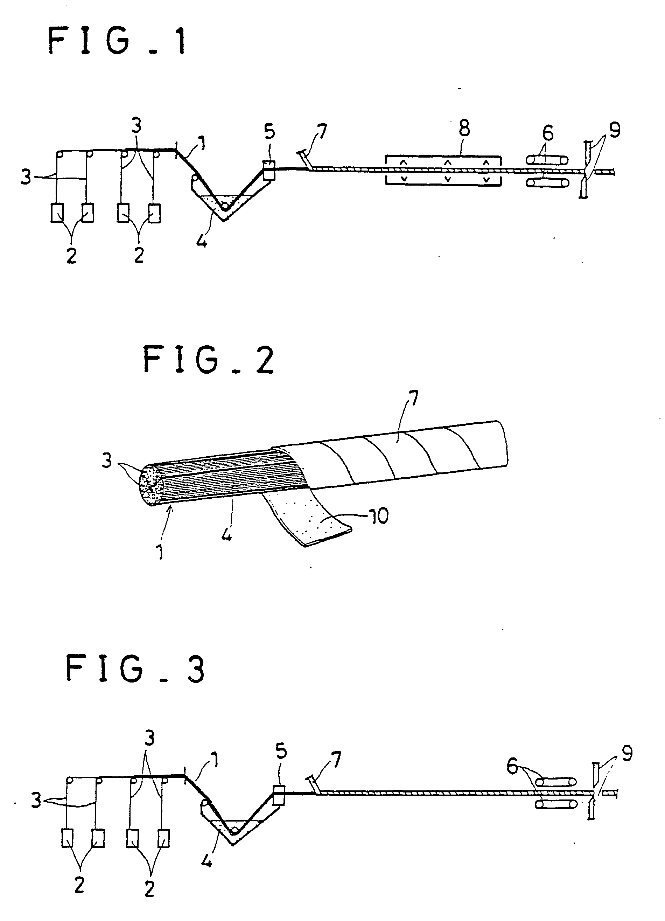

Figures 1 and 2 show one embodiment of a process for manufacturing of a structural reinforcing member of this invention. Numeral 1 denotes a fibre body. Numeral 2 denotes a supply source of a thread 3. The thread 3 comprises roving, for instance, and is made of any kind of fibre selected from, for example, any inorganic fibre such as carbon fibre, glass fibre, ceramic fibre, etc., any heat resisting organic fibre such as aromatic polyamide, aromatic polyether amide, aromatic polysulphonamide, aromatic polyketone amide, aromatic polyamine amide, etc., and any stainless metallic fibre.

The thread need not be a yarn selected from, for example, roving, multifilaments, strands and slivers, but may be a monofilament.

In the illustrated embodiment, the thread comprises roving as mentioned above, and these threads 3 are collected into a parallel arrangement, with or without twist, to form a fibre body 1, and the fibre body 1 is impregnated with a hardenable material 4 contained in a soaking container.

The hardenable material may be any cold or heat setting resin such as of epoxy type, vinyl ester type, phenolic type, polyimide, etc., any cold or heat setting inorganic material such as of alkali metallic silicate type, colloidal silica type, phosphate type, cement type, etc., or a mixture of the foregoing organic and inorganic cold or heat setting materials.

In the hardenable material, there may be present a hardening agent, a colouring agent, or other agents as occasion demands.

The fibre body 1, after being impregnated with the hardenable material 4 is introduced into a drawing die 5 having a desired sectional shape such as a circle or the like so as to be formed into a drawn body having a predetermined sectional shape according to the die.

Referring to Figure 1, numeral 6 denotes a drawing means for drawing the fibre body 1 from the die 5.

The above steps are not different from those of the conventional process. Next, according to this invention, a tape 7 is coiled around the fibre body 1 drawn from the die 5 by wrapping apparatus (not shown), for instance, so as to cover the same, and thereafter the drawn fibre body 1 covered with the coiled tape 7 is moved into a heating chamber 8 in the case where a thermosetting resin is used as the hardenable material 4 in order to subject the material 4 to a hardening treatment. After the drawn fibre body 1 becomes completely rigid, it is taken out from the heating chamber 8, and is then cut by a cutter 9 into pieces of a predetermined length. The tape is removed from each length to obtain a large number of structural reinforcing members.

As occasion demands, the hardening treatment may be divided into two stages. In this case, in the foregoing embodiment, an additional heating chamber (not shown) is provided before or after the heating chamber 8.

In the case where a cold setting resin is used as the hardenable material 4, the heating chamber 8 is not necessary, and, as shown in Figure 3, the drawn fibre body 1 is cut by the cutter 9 to a predetermined length, without being heated, and thereafter a large number of cut fibre bodies are allowed to stand until hardened completely at room temperature to produce structural reinforcing members.

As for the tape 7, there may be used paper tape, metallic tape or resin tape. The tape 7 is preferably coated with a releasing agent l0 such as silicone resin or the like so that it may be easily removed after the hardening treatment of the drawn fibre body 1.

In the case where a foaming thermosetting resin is used as the hardenable material 4, it is desirable to use as the tape 7 a porous or gas permeable tape.

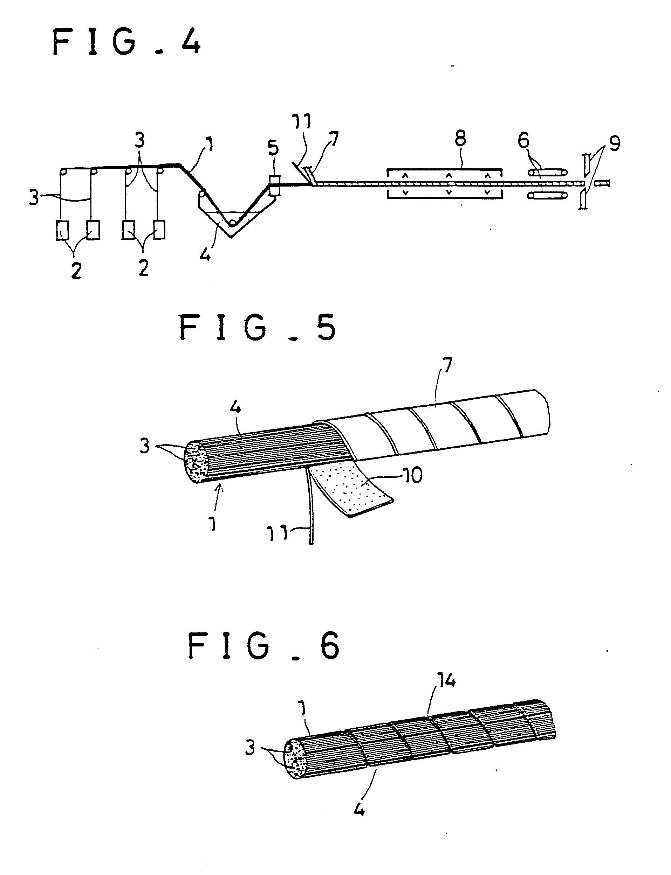

Another embodiment of this invention in which structural reinforcing members having a deformed sectional shape are produced, will now be described with reference to Figures 4 to 6.

The tape 7 is coiled, by a wrapping apparatus (not shown), around the fibre body 1 impregnated with a thermosetting resin 4 and drawn from the die 5 in the similar manner as in the foregoing embodiment, and thereafter an elongate flexible member 11 (e.g. a string member 11) is coiled, at predetermined intervals, around the coiled tape 7 which has been disposed around the fibre body 1 by a winding apparatus or the like (not shown) so as to eat into or penetrate the periphery of the fibre body 1. In this condition, the fibre body 1 is moved into the heating chamber 8 and is subjected to a complete hardening or curing treatment within the chamber 8. The complete rigid fibre body 1 taken out from the chamber 8 is cut by the cutter 9 into pieces of a desired length and the resultant cut tape 7 is removed along with the cut member 11 from each of the resultant cut fibre bodies 1 to obtain a large number of deformed structural reinforcing members each having a coiled groove 14 in the periphery of the rigid fibre body 1, as shown in Figure 6.

In the foregoing embodiments, the tape 7 is coiled around the fibre body 1 continuously drawn from the die 5 and, if necessary, in addition the member 11 is coiled around the fibre body wrapped in the tape 7. However, the tape 7 and, if necessary, the member 11 may be disposed around a fibre body of a predetermined length prepared by cutting the fibre body 1. Furthermore, the tape 7 or the cut tape removed from the fibre body can be used again.

The elongate member 11 may be made of paper, metal or synthetic resin, and the sectional shape thereof, the coiled pitch thereof or the manner of coiling thereof may be changed as desired, so that various deformed structural reinforcing members can be easily produced.

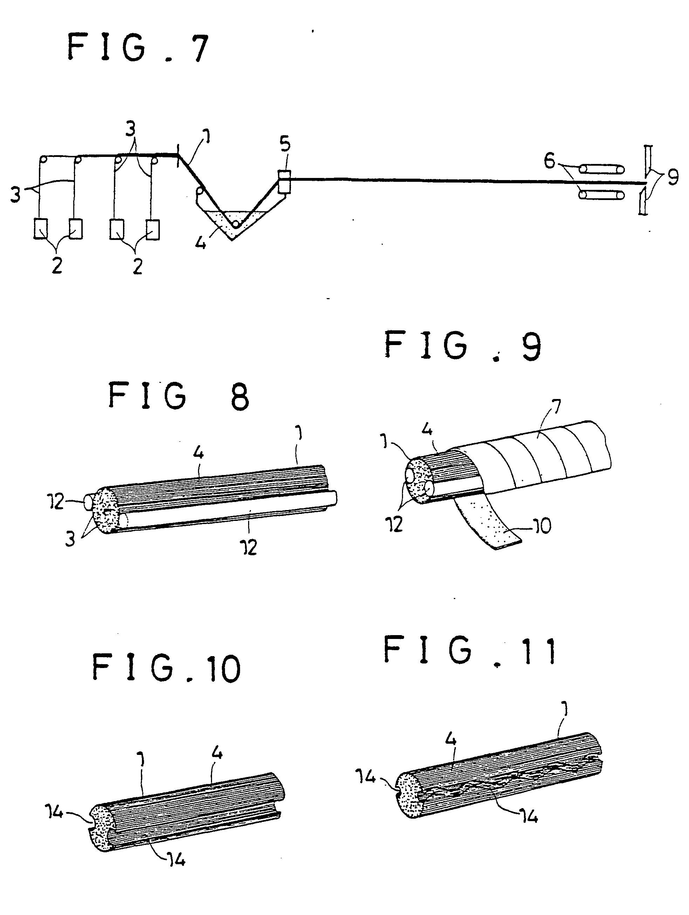

Another embodiment of this invention in which structural reinforcing members having various deformed sectional shapes different from that shown in Figure 6 are produced, will be described with reference to Figures 7 to 11.

The fibre body 1 impregnated with a cold setting resin is introduced into the die 5 having a desired sectional shape, for instance, a circular shape, and is drawn into a predetermined sectional shaped body. It is then cut by the cutter 9 into pieces of a predetermined length to obtain a large number of fibre bodies 1, as shown in Figure 7. Next, a pair of shaping members 12 coated with a releasing agent and each comprising a rod whose sectional shape is a circle are disposed on the right and left side of the fibre body 1 and along the entire length of the fibre body 1, as shown in Figure 8. Thereafter, the tape 7 is coiled around the fibre body 1 so as to fasten the shaping members 12 to the fibre body 1 and thrust them into the same so that the circular sectional shape of the fibre, body 1 is deformed. In this deformed condition, the fibre body 1 is allowed to stand at room temperature until it is completely hardened, as shown in Figure 9.

Thereafter, the tape 7 is uncoiled and the two shaping members 12 are removed from the fibre body 1. Thus there is obtained a deformed structural reinforcing member of this invention, as shown in Figure 10.

In the foregoing embodiment, the deformed sectional shape of the fibre body 1 is attained by fastening the shaping members 12 to the fibre body with the tape 7 so as to thrust them into the fibre body 1. Alternatively, the shape may be attained by pushing the members 12 into the drawn fibre body 1 by means of a pressing apparatus before the tape 7 is coiled therearound, and thus in this case, the tape 7 serves to keep the members 12 in their thrust condition.

The shaping member 12 may be made of metal, ceramic, inorganic or organic material or a combination thereof. Also, the shape of the shaping member 12 in the longitudinal direction may be of any desired shape other than the straight shape used in the above embodiment. For instance, the longitudinal shape thereof may be a curved shape such as a waveform shape, in which case a deformed structural reinforcing member having a waveform groove 14 extending in the longitudinal direction thereof is produced as shown in Figure 11.

The shaping member 12 is not limited to one of bar shape, but may be of spherical shape, of star shape or of any other desired shape. A large number of these may be distributed on the periphery of the fibre body 1, over the entire length thereof.

Further, the shaping member 12 may be a pliable long member and in this case the pliable shaping member is coiled around the fibre body 1 so as to deform the same.

In the foregoing embodiment, after the drawn fibre body 1 is cut to a predetermined length, a deformed sectional shape is given thereto by the shaping member 12. However, before cutting the drawn fibre body 1, a deformed sectional shape may be given thereto by the shaping member 12, and thereafter the drawn fibre body 1 with the shaping member 12 set therein is cut to a predetermined length.

The following Examples illustrate the invention.

Example 1

A fibre body formed by collecting thirty six strands into a parallel arrangement, each strand being made of total aromatic polyamide filament of 1400 denier, manufactured under the trade name "Kevlar 49 No. 965", was dipped in a thermosetting resin which comprises 100 parts of bisphenol A type epoxy resin, 33 parts of diaminobiphenyl sulphone, 1 part of boron trifluoromonoethylamine and 100 parts of methyletherketone so that the fibre body was impregnated with the thermosetting resin in a ratio of the resin to the fibre body of 80:100. Herein, "parts" means "parts by weight". Thereafter, the fibre body was introduced into a die which was circular in its sectional shape and thereby there was obtained a drawn fibre body having a circular sectional shape of about 3 mm in diameter.

Thereafter, PET (polyethyleneterephthate) tape 7mm in width and 50 microns in thickness was coiled around the fibre body so as to cover the same, and the body was passed through a heating chamber at 130°C for 2 minutes so that the body is subjected to a hardening treatment. The resultant semi-rigid fibre body taken out from the chamber was cut into pieces of 30 m in length and the cut fibre bodies were introduced into a heating chamber and were heated at 130°C for 10 minutes and thereafter at 170°C for 2 hours. The bodies were taken out therefrom, the tape was removed from each of the fibre bodies, each fibre body was cut into pieces of 1.5 m in length, and thus there were produced a large number of structural reinforcing members.

Example 2

A fibre body obtained in almost the same manner as in Example 1 was impregnated with a cold setting resin which comprises 100 parts of bisphenol type epoxy resin, and 10 parts of aliphatic amine in a mixing ratio of the resin to the fibre body of 80:100. The body was introduced into a die of a circular sectional shape, and was drawn therefrom to form a drawn fibre body of a circular sectional shape of about 3 mm in diameter.

A polypropylene tape 7 mm in width and 70 microns in thickness was coiled around the drawn fibre body so as to cover the same, and the body was cut into pieces 1.5 m long in sequence. The large number of fibre bodies of a predetermined length were allowed to stand for 4 days until they were completely hardened, and thereafter the cut tape was removed from each fibre body, and thus there were obtained a large number of structural reinforcing members.

Example 3

A string member comprising PET monofilament of 3000 denier was coiled, at a coiled pitch of 7 mm, around on the drawn fibre body covered with the coiled tape in the same manner as in Example 1, so as to penetrate into the fibre body, and thereafter the fibre body bearing the coiled tape and the coiled string member was treated in the same manner as in Example 1. As a result, there were produced a large number of deformed structural reinforcing members each having a coiled groove formed therearound.

**Claims**

1. A process for manufacturing a structural reinforcing member wherein a fibre body (1) comprising a plurality of threads (3) of reinforcing fibre is impregnated with a hardenable material (4) and is introduced into a drawing die (5) having a desired sectional shape so as to be formed into a drawn fibre body (1) having a predetermined sectional shape, whereupon a tape (7) is coiled therearound so as to cover the same and the drawn fibre body (1) is subjected to a hardening treatment, characterised in that a string member (11) is coiled around the drawn fibre body (1) covered with the coiled tape (7) so that the coiled string member (11) may penetrate the drawn fibre body (1) and thereafter the drawn fibre body (1) is subjected to said hardening treatment.

2. A process for manufacturing a structural reinforcing member wherein a fibre body (1) comprising a plurality of threads (3) of reinforcing fibre is impregnated with a hardenable material (4) and is introduced into a drawing die (5) having a desired sectional shape so as to be formed into a drawn fibre body (1) having a predetermined sectional shape, whereupon a tape (7) is coiled therearound so as to cover the same and the drawn fibre body (1) is subjected to a hardening treatment, characterised in that, before the tape (7) is coiled around the drawn fibre body (1), a shaping member (12) is provided on the periphery of the drawn fibre body (1), the tape (7) is coiled around the drawn fibre body (1) and the shaping member (12) so as to cover the same, the shaping member (12) is forced to penetrate the drawn fibre body (1), and thereafter the drawn fibre body (1) is subjected to said hardening treatment.

3. A process as claimed in claim 1 or 2, wherein the hardenable material is a heat setting material.

4. A process as claimed in claim 1 or 2, wherein the hardenable material is a cold-setting material.

5. A process as claimed in claim 1 or 2, wherein the fibre body (1) comprises a collection of a number of parallel threads (3), with or without twist.

6. A process as claimed in claim 1 or 2, wherein the thread (3) is selected from a monofilament or yarn such as mulfilaments, strand, sliver, roving or the like.

## Patentansprüche

1. Verfahren zur Herstellung eines Verstärkungsbauteils (Bewehrungsbauteils), wobei ein Faserkörper (1) aus einer Vielzahl von Fäden (3) von verstärkenden Fasern mit einem härtbaren Material (4) imprägniert und in ein Ziehwerkzeug (5) mit einer gewünschten Querschnittsform eingeführt wird zur Bildung eines gezogenen Faserkörpers (1) mit festgelegtem Profil, wobei anschließend ein Band (7) zur Umhüllung darum gewickelt wird und der gezogene Faserkörper (1) einer Härtung unterworfen wird,

dadurch gekennzeichnet, daß ein Bandelement (11) um den gezogenen, mit dem Band (7) umwickelten Faserkörper (1) so gewickelt wird, daß das Bandelement (11) in den gezogenen Faserkörper (1) eindringen kann, und danach der gezogene Faserkörper (1) der Härtungsbehandlung unterworfen wird.

2. Verfahren zur Herstellung eines Verstärkungsbauteils (Bewehrungsbauteils), wobei ein Faserkörper (1) aus einer Vielzahl von Fäden (3) von verstärkenden Fasern mit einem härtbaren Material (4) imprägniert und in ein Ziehwerkzeug (5) mit einer gewünschten Querschnittsform eingeführt wird zur Bildung eines gezogenen Faserkörpers (1) mit festgelegtem Profil, wobei anschließend ein Band (7) zur Umhüllung darum gewickelt wird und der gezogene Faserkörper (1) einer Härtung unterworfen wird,

dadurch gekennzeichnet, daß vor dem Umwickeln des Faserkörpers (1) mit dem Band (7) ein Formgebungselement (12) an der Peripherie des gezogenen Faserkörpers (1) angeordnet wird, dann das Band (7) um den gezogenen Faserkörper (1) und das Formgebungselement (12) zur Umhüllung gewickelt wird, das Formgebungselement (12) zum Eindringen in den Faserkörper (1) gebracht wird und danach der gezogene Faserkörper (1) der Härtungsbehandlung unterworfen wird.

3. Verfahren gemäß Anspruch 1 oder 2. bei dem das härtbare Material wärmehärtend ist.

4. Verfahren gemäß Anspruch 1 oder 2. bei dem das härtbare Material kalthärtend ist.

5. Verfahren gemäß Anspruch 1 oder 2, bei dem der Faserkörper (1) aus einer Zusammenfassung einer Anzahl paralleler Fäden (3), mit oder ohne Drall besteht.

6. Verfahren gemäß Anspruch 1 oder 2, bei dem die Fäden (3) ausgewählt sind aus Monofilen oder Garn, wie Multifilamenten, Strängen, Faserband, Rovings oder dergleichen.

## Revendications

1. Procédé de fabrication d'une pièce structurale d'armature dans lequel on imprègne d'un matériau durcissable (4) une masse de fibres (1) constituée d'une pluralité de fils (3) de fibres d'armature et on l'introduit dans une filière d'étirage (5) ayant en coupe la forme désirée de façon à la former en une masse étirée de fibres (1) ayant en coupe une forme prédéterminée, après quoi on enroule un ruban (7) autour de cette masse de façon à la recouvrir, puis on soumet la masse étirée de fibres (1) à un traitement de durcissement, caractérisé en ce que l'on bobine un élément du genre corde (11) autour de la masse étirée de fibres (1) recouverte du ruban enroulé (7) de façon que l'élément du genre corde (11), bobiné, puisse pénétrer dans la masse étirée de fibres (1), après quoi on soumet la masse étirée de fibres (1) audit traitement de durcissement.

2. Procédé de fabrication d'une pièce structurale d'armature dans lequel on imprègne d'un matériau durcissable (4) une masse de fibres (1) constituée d'une pluralité de fils (3) de fibres d'armature et on l'introduit dans une filière d'étirage (5) ayant en coupe la forme désirée de façon à la former en une masse étirée de fibres (1) ayant en coupe une forme prédéterminée, après quoi on enroule un ruban (7) autour de cette masse de façon à la recouvrir, puis on soumet la masse étirée de fibres (1) à un traitement de durcissement, caractérisé en ce que, avant d'enrouler le ruban (7) autour de la masse étirée de fibres (1) on rapporte un élément de formage (12) sur la périphérie de la masse étirée de fibres (1), puis on enroule le ruban (7) autour de la masse étirée de fibres (1) et de l'élément de formage (12) de façon à les recouvrir, l'élément de formage (12) étant forcé de pénétrer dans la masse étirée de fibres (1), après quoi on soumet la masse étirée de fibres (1) audit traitement de durcissement.

3. Procédé selon la revendication 1 ou 2, dans lequel le matériau durcissable est un matériau thermodurcissable.

4. Procédé selon la revendication 1 ou 2, dans lequel le matériau durcissable est un matériau durcissant à froid.

5. Procédé selon la revendication 1 ou 2, dans lequel la masse de fibres (1) est constituée d'une collection d'un certain nombre de fils parallèles (3), avec ou sans torsion.

6. Procédé selon la revendication 1 ou 2, dans lequel le fil (3) est sélectionné parmi un monofilament ou un filé tel qu'un multifilament, un brin, un ruban, une mèche ou analogue.

# FIG.1

# FIG.2

# FIG.3

1

# FIG.4

# FIG.5

# FIG.6

FIG.7

FIG.8

FIG.9

FIG.10

FIG.11